# EUROPÄISCHE PATENTSCHRIFT

(11) **EP 1 789 241 B1**
(45) Veröffentlichungstag und Bekanntmachung des Hinweises auf die Patenterteilung: **05.10.2011**
(21) Anmeldenummer: 05783969.8
(22) Anmeldetag: 08.08.2005
(51) Int. Cl.: B28C 5/42, B60P 3/16

(54) **FAHRMISCHER MIT EINEM GETRIEBE ZUM ANTRIEB EINER TROMMEL**
TRANSIT MIXER HAVING A GEAR UNIT FOR DRIVING A DRUM
BETONNIERE ROULANTE AYANT UNE TRANSMISSION POUR L'ENTRAINEMENT D'UN TAMBOUR

(30) Priorität: 07.08.2004 DE 102004038504
(43) Veröffentlichungstag der Anmeldung: 30.05.2007
(73) Patentinhaber: ZF Friedrichshafen AG, 88038 Friedrichshafen (DE)
(72) Erfinder: HEILIG, Eduard, 88048 Friedrichshafen (DE)
(86) Internationale Anmeldenummer: PCT/EP2005/008588
(87) Internationale Veröffentlichungsnummer: WO 2006/015839

(56) Entgegenhaltungen:
- DE-A1- 2 341 250
- DE-A1- 3 121 797
- DE-U- 1 984 542
- US-A- 3 825 232
- US-A- 4 575 254
- US-A- 5 820 258

## Beschreibung

Die vorliegende Erfindung betrifft einen Fahrmischer mit einem Getriebe zum Antrieb einer Trommel nach der im Oberbegriff von Anspruch 1 näher definierten Art.

Gattungsgemäße Getriebe werden zum Antrieb einer Mischtrommel eines Fahrmischers verwendet, um die Mischtrommel in der Drehrichtung einziehen und der Drehrichtung entleeren anzutreiben, um das Mischgut, beispielsweise Transportbeton, in der Mischtrommel zu mischen oder wieder aus der Mischtrommel hinauszufördern. Eine weitere Aufgabe des Getriebes ist es, die Mischtrommel drehbar zu lagern und hierbei das Gewicht der Mischtrommel und deren Inhalt aufzunehmen und über einen Lagerbock an den Fahrzeugrahmen weiterzugeben. Relativbewegungen welche zwischen dem Fahrzeugrahmen und der Mischtrommel insbesondere bei einer Fahrt auf unebenem Gelände mit beladener Mischtrommel entstehen, müssen ebenfalls von diesem Getriebe ausgeglichen werden.

Das US-Patent US 25 11 240 offenbart ein Getriebe für einen Fahrmischer, bei welchem ein Antriebsmotor über ein Untersetzungsgetriebe die Mischtrommel antreibt, wobei die Mischtrommel über einen außerhalb des Getriebes liegenden Abtriebsflansch angetrieben wird, wobei dieser Abtriebsflansch zur Aufnahme des Trommelgewichtes und zum Ausgleich der Relativbewegungen zwischen der Trommel und dem Fahrzeugrahmen ein elastisches Element aufweist und der Flansch drehfest, jedoch in axialer Richtung beweglich, mit der Mischtrommel verbunden ist, um das Drehmoment in die Trommel einzuleiten. Da der Abtriebsflansch außerhalb des Getriebes angeordnet ist, und axial beweglich ist, entstehen Mikrobewegungen insbesondere in radialer Richtung, welche zusätzlich das elastische Element auf Drehmoment belasten.

Die Offenlegungsschrift DE 23 41 250 offenbart ein Fahrmischergetriebe nach dem Oberbegriff des Hauptanspruches.

Der vorliegenden Erfindungen liegt die Aufgabe zugrunde, ein Getriebe für einen Transportbetonmischer zu schaffen, welches Relativbewegungen zwischen dem Fahrzeugrahmen und der Trommel ausgleicht und das Drehmoment von einem Antriebsmotor auf die Trommel weitergibt, wobei das Getriebe über einen längeren Zeitraum betriebssicher ausgeführt sein muss.

Die Aufgabe wird die kennzeichnenden Merkmale des Hauptanspruchs gelöst.

Erfindungsgemäß ist das Getriebe mit dem Fahrzeugrahmen bzw. einem Lagerbock, welcher mit dem Fahrzeugrahmen verbunden ist, und der Mischtrommel verbunden. Zwischen der Mischtrommel und dem Fahrzeugrahmen ist mindestens ein elastisches Bauteil angeordnet, welches die Gewichtskraft der Trommel und deren Inhalt aufnimmt, sowie das Drehmoment abstützt. Gemäß der Erfindung ist das elastische Bauteil zwischen dem Lagerbock und einem Fuß des Getriebegehäuses angeordnet, wodurch das Getriebe den Bewegungen der Mischtrommel folgt und der Ausgleich dieser Bewegungen zum Lagerbock über dieses elastische Bauteil erfolgt. Dieses elastische Bauteil weist an jeder Seite eine Platte auf, welche über Verbindungselemente einerseits mit dem Fuß des Getriebegehäuses und andererseits mit dem Lagerbock verbindbar ist.

Weitere Merkmale sind der Figurenbeschreibung zu entnehmen.

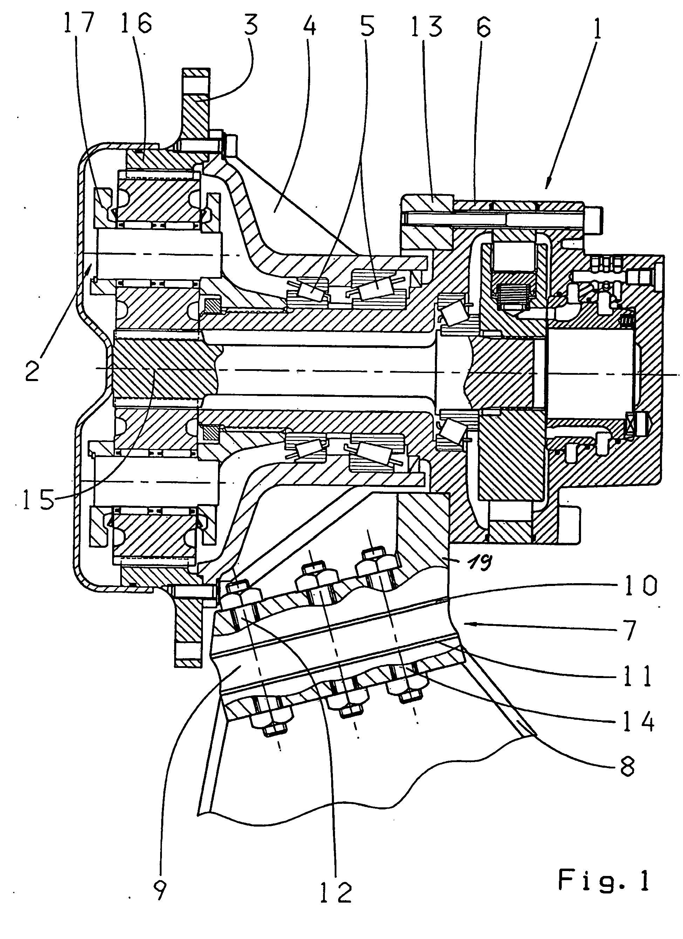

Es zeigen
Figur 1 ein Getriebe mit einem elastischen Bauteil zwischen dem Fuß des Getriebegehäuses und einem Lagerbock,

Figur 1: Ein Antriebsmotor 1, vorzugsweise ein hydrostatischer Motor, insbesondere ein Radialkolbenmotor, treibt über mindestens eine Planetenstufe 2 einen Abtriebsflansch 3 an, welcher fest mit der nicht gezeigten Trommel des Fahrmischers verbunden ist. Es besteht auch die Möglichkeit, langsamer laufende Radialkolbenmotoren mit einer Planetenstufe oder schnell laufende Axialkolbenmotoren mit mehreren Planetenstufen oder Elektromotore zum Antrieb des Abtriebsflansches zu verwenden. Das Gewicht der Trommel, sowie deren Drehbewegung, wird vom Abtriebsflansch 3 über ein drehbares Gehäuseteil 4 in eine Lagerung 5 eingeleitet, welche sich auf einem ortsfesten Gehäuseteil 6 abstützt. Das ortsfeste Gehäuseteil 6 steht über ein elastisches Bauteil 7 mit einem Lagerbock 8 in Verbindung, welcher mit dem Fahrzeugrahmen verbunden ist. Die Lagerung 5 ist vorzugsweise als Kegelrollenlagerung ausgeführt. Das elastische Bauteil 7 besteht aus einem flexiblen Kern 9, welcher mit einer ersten Platte 10 und mit einer zweiten Platte 11 verbunden ist. Die erste Platte 10 ist über Verbindungselemente 12 mit dem ortsfesten Gehäuseteil 6 oder mit einem mit diesem verbundenen Bauteil 13 verbunden. Die zweite Platte 11 ist ebenfalls über Verbindungselemente 14 mit dem Lagerbock 8 verbunden. Vorzugsweise ist das innere Zentralrad 15 der Planetenstufe 2, der Antrieb und das äußere Zentralrad 16 bildet den Abtrieb. Es besteht jedoch auch die Möglichkeit, dass der Planetenträger 17 den Abtrieb bildet. Die Lagerung 5 ist vorzugsweise als Wälzlagerung, insbesondere Kegelradlagerung, ausgebildet, es besteht jedoch auch die Möglichkeit, die Lagerung 5 als Gleitlagerung auszubilden. Indem das flexible Bauteil 7 Drehmoment und Gewichtskräfte der Trommel aufnimmt, entsteht eine sichere und wartungsfreie Lösung.

### Bezugszeichen

- 1: Antriebsmotor
- 2: Planetenstufe
- 3: Abtriebsflansch
- 4: Drehbares Gehäuseteil
- 5: Lagerung
- 6: Ortsfestes Gehäuse
- 7: Elastisches Bauteil
- 8: Lagerbock
- 9: Kern
- 10: Platte
- 11: Platte
- 12: Verbindungselemente
- 13: Bauteil
- 14: Verbindungselemente
- 15: Inneres Zentralrad
- 16: Äußeres Zentralrad
- 17: Planetenträger
- 19: Fuß

## Patentansprüche

1. Fahrmischer mit einem Getriebe zum Antrieb einer Trommel, bei welchem ein Abtriebsflansch (3) des Getriebes drehfest mit der Trommel verbunden ist und ein Gehäuse (6) des Getriebes ortsfest mit einem Fahrzeugrahmen in Verbindung steht und das Getriebe mindestens ein elastisches Bauteil (7) zum Ausgleich von Bewegungen zwischen dem Fahrzeugrahmen und der Trommel aufweist, **dadurch gekennzeichnet, dass** das elastische Bauteil (7) zwischen einem Fuß (19) des Getriebegehäuses und einem Lagerbock (8) des Fahrzeugrahmens angeordnet ist und das vom Getriebe erzeugte Drehmoment und die Kräfte der Trommel aufnimmt, wobei das elastische Bauteil (7) auf seiner Oberseite eine Verbindungsplatte (10) aufweist, welche mit Verbindungselementen (12) mit dem Getriebegehäuse (6) verbunden ist und an seiner Unterseite eine Verbindungsplatte (11) aufweist, welche mit Verbindungselementen (14) mit dem Lagerbock (8) des Fahrzeugrahmens verbunden ist.

## Claims

1. Transport mixer having a gear mechanism for driving a drum, in which transport mixer an output flange (3) of the gear mechanism is connected fixedly to the drum so as to rotate with it, and a housing (6) of the gear mechanism is connected in a stationary manner to a vehicle frame, and the gear mechanism has at least one elastic component (7) for compensating for movements between the vehicle frame and the drum, **characterized in that** the elastic component (7) is arranged between a foot (19) of the gear-mechanism housing and a bearing block (8) of the vehicle frame and absorbs the torque produced by the gear mechanism and the forces of the drum, the elastic component (7) having, on its upper side, a connecting plate (10) which is connected by way of connecting elements (12) to the gear-mechanism housing (6), and has, on its underside, a connecting plate (11) which is connected by way of connecting elements (14) to the bearing block (8) of the vehicle frame.

## Revendications

1. Mélangeur mobile comprenant une transmission pour l'entraînement d'un tambour, dans lequel une bride de prise de force (3) de la transmission est connectée de manière solidaire en rotation au tambour et un boîtier (6) de la transmission est en liaison fixe avec un châssis du véhicule et la transmission présente au moins un composant élastique (7) pour compenser des mouvements entre le châssis du véhicule et le tambour, **caractérisé en ce que** le composant élastique (7) est disposé entre une base (19) du boîtier de la transmission et un coussinet (8) du châssis du véhicule et reçoit le couple produit par la transmission et les forces du tambour, le composant élastique (7) présentant sur son côté supérieur une plaque de connexion (10) qui est connectée par des éléments de connexion (12) au boîtier de la transmission (6) et présentant sur son côté inférieur une plaque de connexion (11) qui est connectée par des éléments de connexion (14) au coussinet (8) du châssis du véhicule.
